# EUROPEAN PATENT APPLICATION

(11) **EP 1 676 749 A1**
(43) Date of publication of application: **05.07.2006**
(21) Application number: 04078559.4
(22) Date of filing: 29.12.2004
(51) Int. Cl.: B60R 7/05

(54) **Document holder, sun visor with document holder**

(71) Applicant: Grupo Antolin Ingenieria, S.A., 09007 Burgos (ES)
(72) Inventor: Michel, Patrick, 88360 Rupt sur Moselle (FR); Le Floch, Ronan, 88200 Remiremont (FR)
(74) Representative: Esteban Perez-Serrano, Maria Isabel

(57) **Abstract**

A document holder configured to be located on a perimeter of interior first housing elements (1) for housing an accessory within a sun visor. The document holder has a substantially U-shaped structure including: a first tab (10) facing a user, the first tab (10) having a rear portion (11) for holding a document between the rear portion (11) and a portion of the sun visor facing the rear portion (11); a second tab (20) including first attaching elements (21) for attaching the document holder to second housing elements (2); a mid portion (30) connecting the fist tab (10) and the second tab (20); the second tab (20) having a shape configured to match the second housing elements (2); the mid portion (30) having a shape configured to match the perimeter of the first housing elements (1).

## Description

### Field of the invention

The present invention relates to document holders for sun visors, said documents being tickets, cards or the like.

### Background of the invention

Sun visors are commonly placed in the passenger compartment of a motor vehicle. Such sun visors are normally adapted to be turned to a desired position from the retracted position close to the roof lining to the operative position, either along the front windshield or the side window, so as to protect the vision of the vehicle occupants from glares of the sun light and the head lights of the oncoming vehicles at night.

Due to the fact that the sun visor is located near the vehicle occupant, it is commonly equipped with a ticket holder for storing various objects (tickets, cards and the like).

For this purpose, some different inventions are known in the state of the art. Some of them have a very complicated design and need additional fixation elements such as adhesives, screws, clips or welding.

Other known solutions in the state of the art limit the thickness of the object (card, ticket) to a small thickness.

Other solutions are only useful for a specific sun visor design, that is, it is necessary to use a specific ticket holder for each sun visor.

DE 29701047 discloses one ticket clip rigidly fixed to a shorter side of the frame of the mirror. This ensures that tickets can be retained between the clip and the sun visor. The clip may be structurally integral with the mirror frame or, alternatively, may be fixed to the frame.

### Description of the invention

The solution set forth in the present invention shows a ticket or document holder which avoids the use of additional fixing elements, avoids limit thickness of the objects (papers, tickets, cards and the like) and it is independent from the vanity mirror's frame or cover.

Apart from the advantages mentioned above, due to the simple design of the ticket or document holder, a very simple tool is required to manufacture it (low manufacturing cost).

A first aspect of the invention refers to a document holder configured to be located on a perimeter of interior first housing means for housing an accessory within a sun visor.

The document or ticket holder of the present invention is located in a perimeter of a housing means for an accessory of the sun visor such as a vanity mirror, a lighting module or the like. The document or ticket holder is located in such a way that the document or ticket holder surrounds the portion of the sun visor body corresponding to the housing means for an accessory of the sun visor. The housing perimeter excludes the outer perimeter of the sun visor. The document or ticket holder is accommodated so that one of its sides or tabs is placed on a user's side of the sun visor, while the other side or tab of the ticket holder remains inside the body of the sun visor. Further, the attaching means to ensure the document or ticket holder position on the rear portion of the sun visor are part of the body of the sun visor, thus avoiding adhesives or any other auxiliary joining means.

The document or ticket holder has a substantially U-shaped structure comprising:
a first tab facing a user, said first tab having a rear portion for holding a document
between the rear portion and a portion of the sun visor facing said rear portion;
a second tab comprising first attaching means for attaching the document holder to the second housing means provided inside the sun visor and preventing sliding of the document holder with respect to the second housing means; a mid portion connecting the first tab and the second tab;
the second tab having a shape configured to match the second housing means;
the mid portion having a shape configured to match the perimeter of the first housing means;
the second tab providing a snug fit of the document holder to the second housing means.

The first attaching means can comprise at least one first slot on each side end of the second tab.

Optionally, the first tab has a slope on the rear portion for facilitating insertion of a document.

A second aspect of the invention refers to a sun visor comprising at least one document holder as described above. That is, the document holder is configured to be located on a perimeter of the interior first housing means for housing an accessory within a sun visor. The ticket holder is fixed to an edge of the first housing means, and the perimeter of the first housing means exclude an outer perimeter of the sun visor.

The accessory included in the sun visor can be a vanity mirror housed on the first housing means. The sun visor can also comprise a lighting module on the first housing means. The document holder is configured to be located on an edge of the first housing means so that the document holder surrounds the body of the sun visor and so that the mid portion is in contact with an edge of the first housing means.

### Brief description of the drawings

A series of drawings helping to better understand the invention will be very briefly described below, which drawings are expressly related to an embodiment of said invention, presented as a non-limiting example thereof.

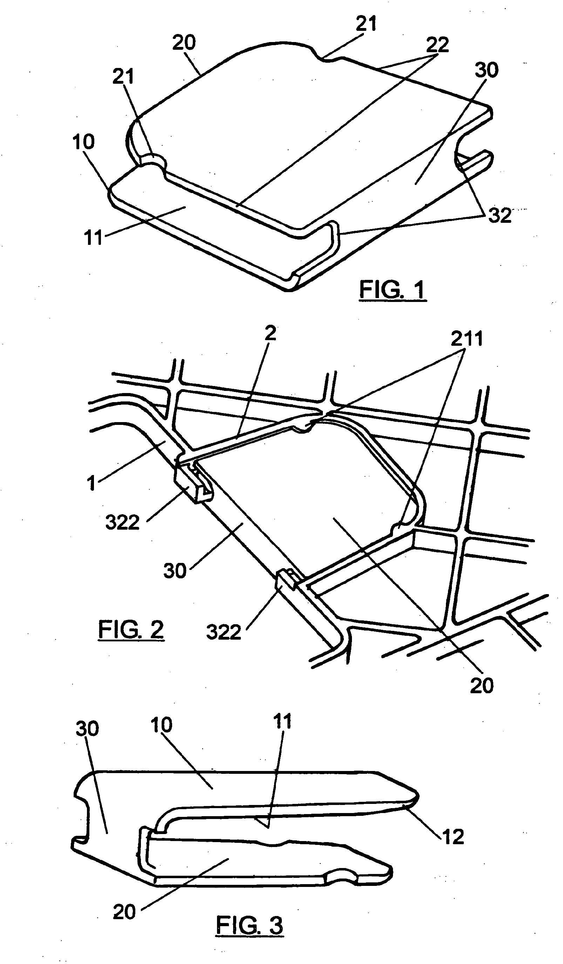

Figure 1 shows a perspective view of the ticket holder of the invention.
Figure 2 shows a ticket holder placed on a sun visor. It is a view from the hidden side of the sun visor.
Figure 3 shows one of the tabs provided with a little inclination outward in order to facilitate the insertion of objects between the tab and the sun visor's body.

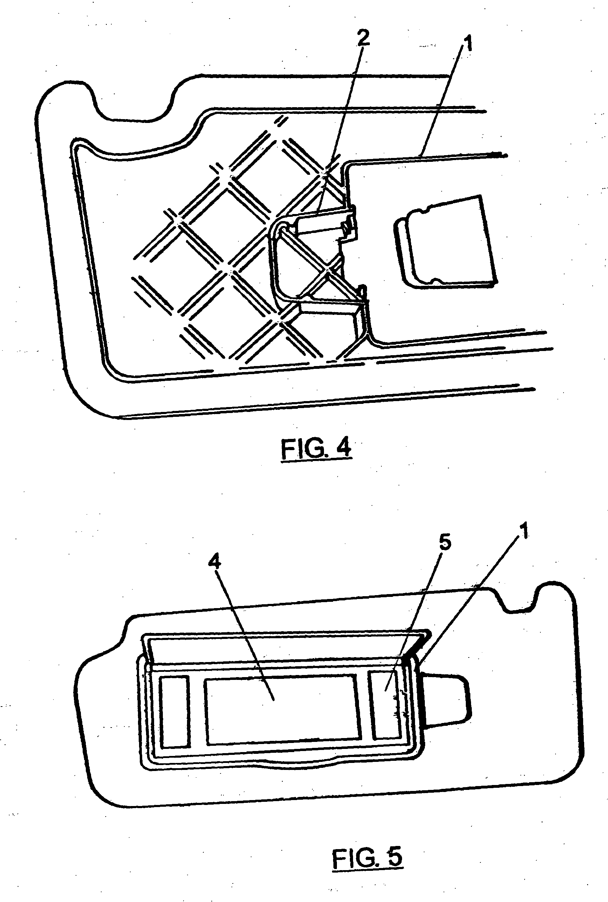

Figure 4 shows a view of the box configuration where the ticket holder is placed.

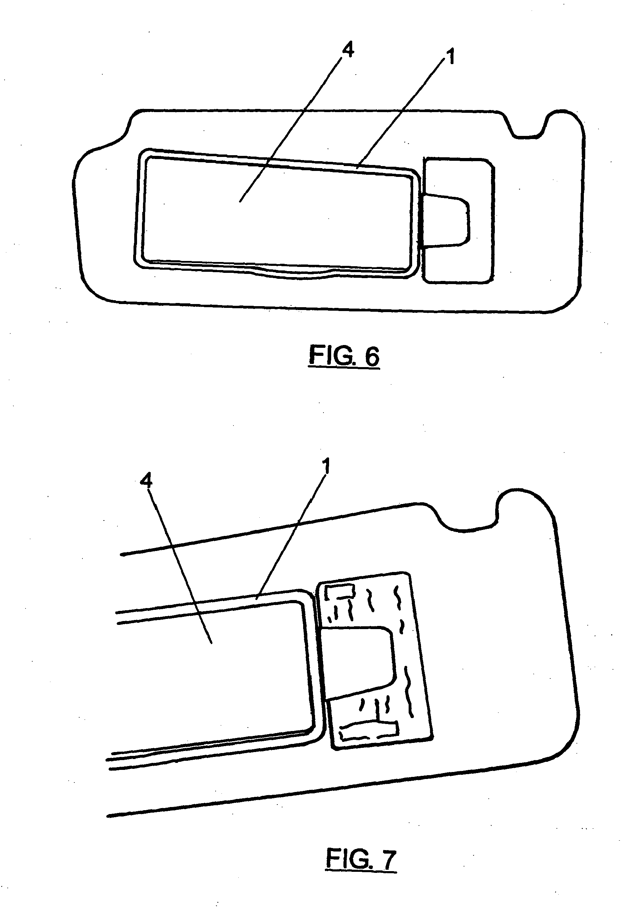

Figures 5 and 6 show a general view of the sun visor assembly.
Figure 7 shows a view of the ticket holder mounted on the sun visor.

### Description of preferred embodiments of the invention

According to one embodiment of the invention, the document or ticket holder comprises:
- two largest flexible sides, in other words, a first tab 10 and a second tab 20:

- the first tab 10 for retaining the documents (tickets, papers, cards and the like) between its rear portion 11 surface and the sun visor's body and to fix the ticket holder against the sun visor;
- the second tab 20 for attaching the ticket holder to a hidden side of the sun visor. The second tab 20 comprises two slots 21 to retain the ticket holder in one of the sun visor's halves (when the sun visor is made of two halves)
- a smallest side being the mid portion 30 and functioning as a stop against the sun visor.
- a box configuration functioning as housing means located in one of the sun visor's halves to place the ticket holder. The second housing means 2 are provided with first protrusions 211 matching the first slots or first attaching means 21 of the second tab 20 in order to retain the ticket holder in its correct position. The edge of the first housing means 1 are provided with second protrusions (322) matching second slots 32 to avoid fabric covering the sun visor become creased.

Due to its geometry,
- the document holder can be fitted to the sun visor without using additional attaching means (adhesives, screws, welding and the like).
- the document holder is capable of properly holding cards or tickets with different thickness.
- A specific ticket holder can be used for many different models of sun visors.
- A very simple tool is required to manufacture the ticket holder.
- The ticket holder is independent from the vanity mirror.

## Claims

1. A document holder:
configured to be located on a perimeter of interior first housing means (1) for housing an accessory within a sun visor;
having a substantially U-shaped structure comprising:
a first tab (10) facing a user, said first tab (10) having a rear portion (11) for holding a document between the rear portion (11) and a portion of the sun visor facing said rear portion (11);
a second tab (20) comprising first attaching means (21) for attaching the document holder to second housing means (2) provided inside the sun visor and preventing sliding of the document holder with respect to the the second housing means (2);
a mid portion (30) connecting the first tab (10) and the second tab (20);
the second tab (20) having a shape configured to match the second housing means (2);
the mid portion (30) having a shape configured to match the perimeter of the first housing means (1);
the second tab (20) providing a snug fit of the document holder to the second housing means (2).

2. The document holder of claim 1 wherein the first attaching means (21) comprise at least one first slot on each side end (22) of the second tab (20).

3. The document holder of any of claims 1-2 wherein the first tab (10) has a slope (12) on the rear portion (11) for facilitating insertion of a document.

4. A sun visor comprising at least one document holder according to any of claims 1-3.

5. The sun visor of claim 4 wherein the accessory is a vanity mirror (4)

6. The sun visor of claim 4 wherein the accessory is a lighting module (5).
